# EUROPEAN PATENT APPLICATION

(11) **EP 2 475 123 A1**
(43) Date of publication of application: **11.07.2012**
(21) Application number: 11290005.5
(22) Date of filing: 05.01.2011
(51) Int. Cl.: H04L 1/00, H04B 7/06, H04W 16/28

(54) **Method for data transmission over a radio channel of a wireless network and corresponding station**

(71) Applicant: Alcatel Lucent, 75007 Paris (FR)
(72) Inventor: Aziz, Danish, 70435 Stuttgart (DE); Wild, Thorsten, 70435 Stuttgart (DE)
(74) Representative: Dreiss

(57) **Abstract**

The present invention refers to a method (41) for data transmission over a radio channel (17) between a first station (13) of a wireless network (11) and a second station (15) of said network (11), the method (41) comprising: determining (51) at least one characteristic (c) of the radio channel (17) and adapting (59) signal processing being related to said data transmission and being performed by the first station (13) and/or the second station (15) according to said characteristic (c). In order to improve an average capacity of the channel (17) and/or the average throughput of data transmissions between the two network elements (13, 15) it is suggested that the at least one characteristic (c) is determined depending on a geographic location (r, s) of at least one of said stations (13, 15).

## Description

### Field of the invention

The present invention refers to a method for data transmission over a radio channel between a first station of a wireless network and a second station of said network. Furthermore, the present invention refers to a station of a wireless network, said station being adapted for data transmission over a radio channel between said station and a further station of the wireless network.

### Background

It is known in the art to adapt data transmissions to information regarding a radio channel. This channel-related information is usually obtained by channel estimation. In a cellular communication system, channel estimation is typically based on filtering a pilot signal emitted by a base station of the cellular communication system. A filter for filtering the pilot signal is typically designed under worst-case assumptions regarding long term characteristics of the radio channel, such as a Doppler spread or a delay spread of the channel.

Furthermore, a method for determining cell coverage in a wireless communication system is known. According to this method, a location-based coverage database is provided.

### Summary

The object of the present invention consists in providing a method and a network element for data transmission over a radio channel that allow for improving an average capacity of the channel and/or the average throughput of data transmissions between two network elements of a wireless network.

According to a preferred embodiment of the invention, a method for data transmission over a radio channel between a first station of a wireless network and a second station of said network is provided, the method comprising: determining at least one characteristic of the radio channel and adapting signal processing being related to said data transmission and being performed by the first station and/or the second station according to said characteristic, wherein the at least one characteristic is determined depending on a geographic location of at least one of said stations.

By determining the at least one characteristic of the radio channel depending on the geographic location, the signal transmission can be adapted to radio conditions specific to the location. The signal processing can be adapted without relying on worst-case assumption regarding the characteristic which hold for at least almost all possible locations of the station. For locations where the radio conditions are rather good, a comparatively good value of the characteristic is determined based on the location and signal processing can be adapted to the good radio conditions, leading to an improvement of the quality of the transmission, e.g., an increase of the channel capacity or throughput. Because the quality of the transmission can be improved for locations having good radio conditions, an average quality, e.g., an average channel capacity or throughput, is improved. Furthermore, location-based determining the characteristic allows for obtaining rather realistic values of the characteristic that better match the actual radio conditions of the channel.

In a preferred embodiment, the first station is a fixed station, the second station is a portable station or a mobile station, and the at least one characteristic is determined depending on the geographic location of the second station. Preferably, the fixed station is a base station of a wireless or cellular network and the second station is a terminal of the cellular network.

The present invention may be applied in connection with any kind of wireless network, including simple point-to-point connections, point-to-multipoint connections, wireless local area networks, and cellular networks. The cellular network may be a radio access network of a mobile communication system specified by the 3^{rd} Generation Partnership Project (3GPP), such as the Global System of Mobile Communications (GSM), the Universal Mobile Telecommunications System (UMTS), Long Term Evolution (LTE), or LTE-Advanced. The present invention may be applied in different (non-3GPP) systems too.

In an embodiment, determining the at least one characteristic comprises retrieving the characteristic from a database, said database being addressed by said geographic location. In other words, a geographic location is assigned to at least one location-dependent value of the characteristic. The value and the location are stored in a location-dependent database. The database comprises a relation between the location and the value of the characteristic. If the signal processing needs to be adapted to the channel, the location of a station, preferably of the second station, is determined and the value of the characteristic is retrieved from the location-based database by submitting a query to the database that includes the determined location. In an embodiment, the first station may determine the location of the second station, e.g. by using a triangulation-like method based on estimating a direction of arrival of a radio signal transmitted by the second station and/or determining a receive signal power of signals originating from-different base stations. In another embodiment, the second station may determine its location by means of a location sensor, such as a GPS receiver. In other embodiments, different approaches for determining the location may be applied.

The method can be applied in scenarios with portable stations that move seldom. For instance, the portable station may be a fixed sensor station communicating over the network with a central node and/or other sensor stations. In this case, the location of the station may be configured manually.

However, in a preferred embodiment, in particular if the second station is a mobile station that moves often, the method comprises automatically determining the momentary geographic location of the first station and/or the second station. The momentary geographic location may be determined by means of a location sensor like a GPS receiver or by another methods. Moreover, the first station may determine the location of the second station by any means.

In an embodiment, the at least one characteristic is a statistical characteristic of the radio channel. The statistical characteristic may relate to a time interval that is larger than a time constant of fast fading effects or Doppler shifts of the radio channel, which is sometimes referred to as the channel coherence time. The time interval may be chosen such that fast fading effects of the channel are averaged out in the statistical characteristic and the statistical characteristic therefore characterizes long term channel properties only. For example, the time interval may be greater than a mean fading period of the radio channel. The mean fading period may be obtained by determining multiple values of a delay between a minimum and a maximum of an extent of the fading effect and calculating a mean value of these multiple values. The mean fading period is inversely proportional to a carrier frequency of a radio signal transmitted over the channel and to the Doppler spread of the channel. In cellular networks using a carrier frequency of 2 GHz, the fading period could be about 180 ms if the second station is moving with a velocity of 3 km/h. If the velocity is 120 km/h then the mean fading period is about 4,5 ms. Accordingly, in an embodiment the time interval may be at least 180 ms, preferably about 1 s or even more than 1 s. Data to be stored in the database may be gathered during normal data transmissions between the stations. In an embodiment, the method comprises determining a value of the at least one characteristic depending on the data transmission and/or depending on measured radio conditions and updating the database using the value and the geographic location of the second station.

Preferably, determining the value of the at least one characteristic comprises measuring multiple momentary values characterizing a momentary property of the radio channel and calculating the statistical characteristic depending on said multiple momentary values. Note that with proper calibration measurements from the uplink can be used for downlink channels and vice versa. While in Frequency Division Duplex (FDD) systems the fast fading between uplink and downlink is uncorrelated, the general directions of departure/arrival and the time-averaged power-delay-profile are usually the same for duplexing distances of existing cellular systems.

In a preferred embodiment, a coverage area of the network is subdivided into multiple sub-areas and the at least one characteristic is assigned to one of said sub-areas. A sub-area may be a rectangle or square, the sub-areas forming a grid that may be stored in the database. A length of an edge of a sub-area may be chosen depending on an accuracy of the determined location.

In an embodiment, adapting said signal processing comprises estimating the channel depending on the at least one characteristic. By using the characteristic, in particular the long-term characteristic, the channel can be estimated without relying on worst-case assumptions regarding long-term characteristics like Doppler spread or delay spread of the channel.

In a preferred embodiment, the characteristic is a delay spread parameter of the channel, a Doppler spread parameter of the channel, and/or a parameter characterizing a velocity profile of the second station. The Doppler spread depends on the movement of the second station, i.e. the behaviour of the second station or its user. The Doppler spread parameter may an average value depending on the typical movement (e.g. speed and/or direction of movement) of stations at a given location. For example, the typical speed of a station residing in a park is less than the typical speed of a station at a location of a road, a highway or railway. For instance, on the road, cars and terminals located within the cars have a rather constant usual velocity of 50 km/h. Thus, the actual Doppler spread can be estimated based on the location-dependent Doppler spread parameter. In an embodiment, the Doppler spread may be estimated based on individual movement information. The movement information may be obtained by using a location sensor of the second station or different means for determining the location of the second station. In another embodiment, both the location-based average Doppler spread parameter and the estimated individual Doppler spread are considered in order to adapt the signal processing related to the data transmission.

In another embodiment, adapting the signal processing comprises deciding on whether to perform beamforming, preferably 3D beamforming, depending on the at least one characteristic.

Beamforming allows for reducing inter-cell interference or inter-user interference. Beamforming works reliably under line-of-sight conditions. Thus, in a preferred embodiment, the characteristic is a line-of-sight probability parameter characterizing a probability that there is a line-of-sight between the geographic location of the first station and the geographic location of the second station.

In an embodiment, adapting said signal processing comprises calculating beamforming weights and/or at least one precoding matrix, said calculating depending on the at least one characteristic. In other words, it is not only possible to decide depending on the location-based characteristic on whether to-perform beamforming, but also to optimize the beamforming and/or precoding itself. For example, the channel characteristics may comprise the spatial channel transmit covariance matrix, or at least one quantity derived from it, like a (full or partial) set of, eigenvectors and eigenvalues corresponding to this matrix. These eigenvectors may be used for calculating the beamforming weights and/or the precoding matrix.

In an embodiment, depending on a distribution of the eigenvalues, it may be decided on whether to use MIMO. The distribution of the eigenvalues may be used for adaptation of MIMO transmission techniques. E.g., a channel with only one strong eigenvalue should be served with beamforming (rank 1 transmission). However, if there are e.g. two significant eigenvalues, spatial multiplexing should be performed (rank 2 transmission), where the corresponding eigenvectors can be used as the transmit weights of the precoding matrix.

According to another embodiment of the present invention a station of a wireless network is provided, said station being adapted for data transmission over a radio channel between said station and a further station of the wireless network, said station being arranged for: determining at least one characteristic of the radio channel and adapting signal processing being related to said data transmission and being performed by the station to said characteristic, wherein said station is arranged for determining the at least one characteristic depending on a geographic location of at least one of said stations.

In an embodiment, the station is a base station of the network. In another embodiment, the station is a fixed or portable terminal or a mobile terminal of the network.

In an embodiment, the station is arranged for executing a method according to the invention, embodiments of which are described above. The station may comprise control circuitry, such as a processor, adapted or programmed for executing a method according to the invention.

### Brief description of the Figures

Preferred embodiments and further advantages of the present invention are shown in the Figures and described in detail hereinafter.
- Figure 1: shows a wireless network and
- Figure 2: shows a flow chart of a method for data transmission over a radio channel of the network shown in Figure 1.

### Description of the embodiments

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

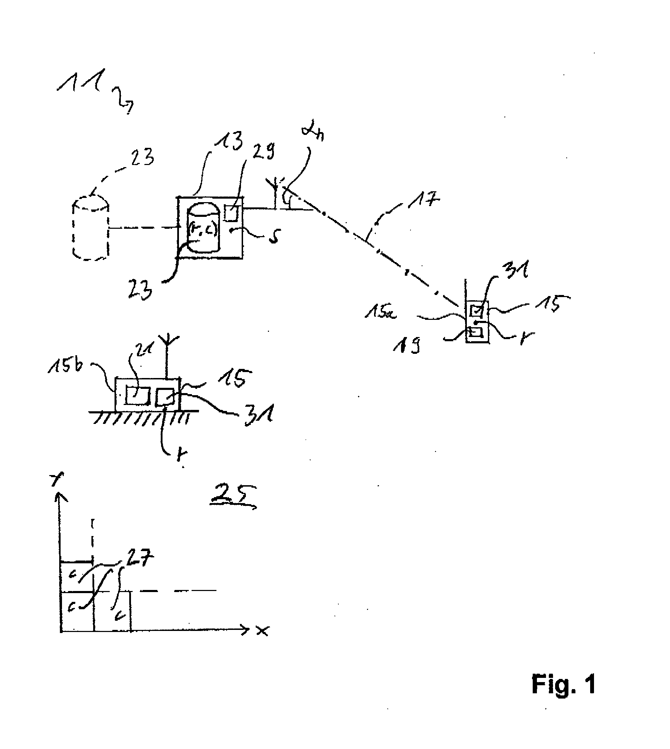

Figure 1 shows a wireless network 11 having a first station in the form of a base station 13 and at least one second station, e. g., terminals 15. In the shown embodiment, the network 11 is a cellular network being part of a cellular communication system such as GSM, UMTS, LTE, or LTE-Advanced. The base station 13 is also referred to a Base Transceiver Station (BTS) in GSM, nodeB in UMTS, and enhanced nodeB (eNodeB) in LTE or LTE-Advanced. The terminal 15 is often referred to as User Equipment (UE).

If a terminal 15 is within a coverage area of the base station 13 then a radio channel 17 can be established between the base station 13 and the terminal 15.

The terminal 15 may be a mobile terminal 15a having a location sensor 19 for determining a geographic location r of the mobile terminal 15a. The location sensor 19 may comprise a GPS receiver, circuitry for determining the location r by analyzing signals emitted by multiple base stations 13, or other means for determining the location r. The terminal 15 may be a portable or fixed terminal 15b that is moved at most seldom. Because the fixed or portable terminal 15b moves rarely, the fixed or portable terminal 15b does not need the location sensor 19. Therefore, in the shown embodiment the fixed or portable terminal 15b does not comprise a location sensor. However, in another embodiment the fixed or portable terminal 15b comprises the location sensor 19.

The portable or fixed terminal 15b may be a sensor node comprising a sensor 21. The sensor node may communicate over the network 11 with a central data acquisition node (not shown) that collects sensor data generated by the sensors 21 of one or more sensor nodes. Because the sensor node communicates with a central node and is not involved in personal communication services, deploying sensor nodes is a so-called machine to machine communication application of the network 11.

The base station 13 has a location-based database 23 for storing a value c of a characteristic of the radio channel 17 related with a location r within the coverage area of the base station 13. As shown in Figure 1, the database 23 may be integrated into the base station 13 so that the base station 13 and the database 23 form a single network element 13 of the network 11. In another embodiment, the database 23 is separated from the base station 13 and therefore forming an additional network element of network 11.

As shown in Figure 1, an area 25 that includes the coverage area of base station 13 may be subdivided into multiple sub-areas 27. A size of the sub-areas 27 may be chosen depending on the accuracy of the determined location r of the terminal 15. In the shown embodiment, these sub-areas 27 are squares, an edge length of which is about 50 mm to 200mm, preferably about 100 mm. A single value c of the at least one characteristic may be assigned to each sub-area 27 and stored in the database 23. The database 23 may be organized according to a two dimensional structure defined by the sub-areas 27.

In an embodiment, the location may be three-dimensional instead of two-dimensional. The characteristic may be determined depending on a height of the terminal 15. In this case, the database 23 may be a three-dimensional spatial database 23. In another embodiment, the characteristic is determined and/or stored in the database 23 depending on a time value. Using time-dependent characteristic allows for adapting transmission over the radio channel 17 to variations of the characteristic that are caused, e.g., by changes of a mobility pattern of the terminals 15. For example, a mean velocity of terminals 15 on a highway may be rather low during the rush hour because of traffic jams.

The base station 13 has first control circuitry 29 arranged for controlling operations performed by the base station 13. The terminals 15 have second control circuitry 31 arranged for controlling operations performed by the terminal 15.

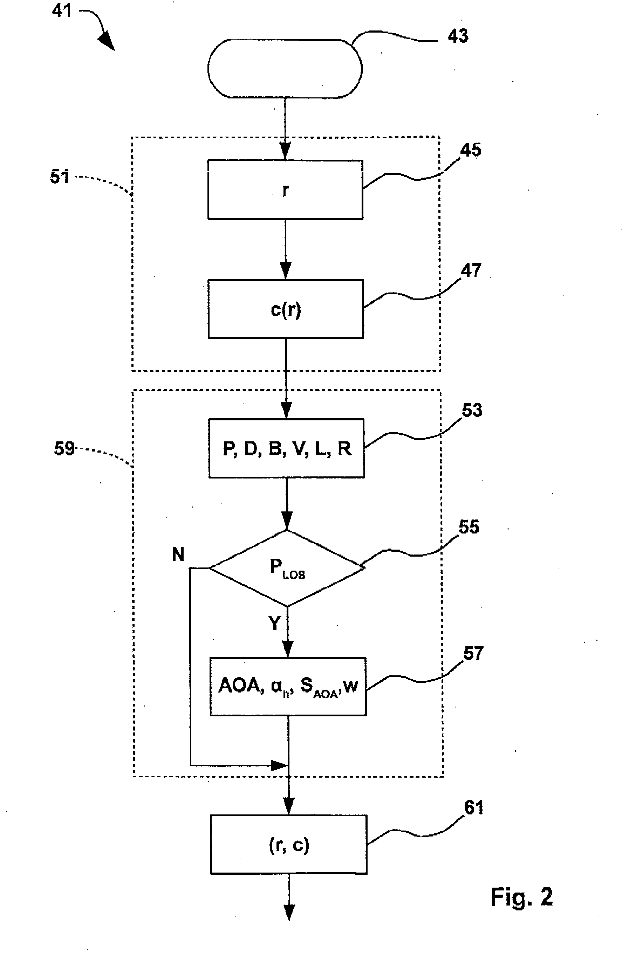

Figure 2 shows a flow chart of a method 41 for data transmission between the base station 13 and one of the terminals 15 over the radio channel 17. In an embodiment, the method 41 is executed by the base station 13, in particular by the first control circuitry 29, only. In this case, the method 41 is transparent to the terminals 15. Conventional terminals 15 do not need to be modified in order to be used in connection with an embodiment of the present invention. However, in another embodiment at least some steps of the method 41 are executed by at least one terminal 15, in particular by the second control circuitry 31. The control circuitry 29, 31 may be arranged or programmed for executing the method 41. Both the first control circuitry 29 and the second control circuitry 31 may comprise a computer program that controls, when executed by the control circuitry 29, 31, the operations of the base station 14 and/or the terminal 15 for executing the method 41.

The method 41 adapts signal processing being related to data transmissions between the base station 13 and the terminal 15, said signal processing may include channel estimation and/or beamforming. Beamforming is usually used in the transmit processing, while channel estimation is done in the receiver. So the method 41 refers to both transmit signal processing and receive signal processing.

After a start 43 of the method 41, a step 45 determines the momentary geographic location r of the terminal_15, e. g., by using the location sensor 21. Instead of using the location sensor 21, the terminal 15, in particular the fixed or portable terminal 15b, may determine its geographic location r by reading manual user input. Moreover, a triangulation-like method may be applied in order to determine the location r. The triangulation-like method may be performed by the base station 13, with the base station 13 sharing information, e.g. via a backhaul network, with other base stations 13.

In a subsequent step 47 the method 41 retrieves a location dependent value c that depends from the location r from the location based database 23. To this end, method 41 may form a query comprising the location r and forwarding this query to a query processor of the database 23. The database 23 may determine the sub-area 27 to which the determined location r belongs and return the value c of the characteristic assigned to that sub-area 27.

The two steps 45 and 47 determine the at least one characteristic of the radio channel 27 depending on the location r of the terminal 15 relative to a location s of the base station 13 (block 51). Because the base station 13 is fixed, it is not required that its location s be stored in the database 23. However, when using a triangulation-like method to determine the location r then the location s of the base station 13 may be stored in the database 23 or in different storage means. The storage means may be part of the base station 13 or a different network element of the network 11.

The value c may correspond to a power delay profile P and/or the value c may be a characteristic of the power delay profile P. For instance, the value c of the at least one characteristic may be a delay spread D (maximum delay spread and/or RMS delay spread) of the channel 17, a Doppler spread B of the channel 17 and/or a parameter V characterizing a velocity profile of the mobile terminal 15a. The value c may characterize a path loss L of channel 17. Furthermore, the value c may correspond to second order statistics such as a covariance matrix R = E{H^{H} H} of the radio channel 17, with H denoting the channel matrix of channel 17 and H^{H} the conjugate transpose of the channel matrix. In an embodiment, the value corresponds to a part of the covariance matrix R or to a value depending on the covariance matrix R.

After the at least one characteristic has being determined in block 51, the channel 17 is estimated in block 53 based on at least one of these parameters P, D, B, V, L, R, The parameters P, D, B, V, L, R are long term channel characteristics, i.e., fast fading effects are averaged out. This parameters P, D, B, V, L, R allow for more precisely estimating the radio channel 17 because channel estimation needs not to rely on worst-case values of these parameters P, D, B, V, L, R anymore. The parameter characterizing the velocity profile V may comprise an information whether the location r corresponds to a pedestrian area, a highway, or the like in order to estimate the velocity of the terminal 15a.

In an embodiment, channel estimation 53 comprises interpolating channel properties over time by means of an interpolation filter such as a Wiener filter. When using multi-carrier modulation like OFDM, received reference symbols may be used as input data for the interpolation. In step 53, the interpolation filter, preferably filter coefficients thereof, may be adapted according to the long term channel characteristics P, D, B, V, L, R, preferably according to the delay spread D and/or the Doppler spread B.

The Doppler spread B depends on the mobility behaviour of the terminal 15, in particular on the speed of the terminal 15. In an embodiment, the method 41 determines whether terminals 15 at a given location have substantially the same mobility behaviour or at least similar behaviours. If so then the Doppler spread B related to this location may be retrieved from the database 23 and used for adapting the interpolation filter in step 53. Otherwise, a worst-case value of the Doppler spread may be applied.

Moreover, the method 41 may comprise a step 55 that decides On whether beamforming shall be performed during a data transmission over the radio channel 17. In an embodiment, beamforming is so called "3D beamforming", which is a method in wireless communication for reducing inter-cell and a inter-user interference. 3D beamforming controls not only the azimuth but also the elevation of a far field pattern of a signal emitted by the base station 13 for creating such narrow beams that spot only the desired terminal 27. However, such narrow beams are difficult to create due to multi-path effects. Therefore, applying 3D beamforming is most effective in line-of-sight cases. Consequently, the value of the characteristic may comprise a line-of-sight probability P_{LOS}, indicating the probability that, at a given location r, there is a line-of-sight between the base station 13 and the terminal 15. Step 55 decides depending on the line-of-sight probability P_{LOS} on whether beamforming, in particular 3D beamforming, shall be performed or not.

If step 55 decides that beamforming shall be performed (Y) then a step 57 may be executed that calculates beamforming weights w depending on the value c of the at least characteristic of the radio channel 27. The at least one characteristic may be an angle of arrival AOA of a signal emitted by the terminal 15 over the radio channel 17. The angle of arrival may be related to an antenna of the base station 13. Preferably, the characteristic is an elevation αₕ of the angle of arrival AOA. In addition, the characteristic may correspond to an angular spread S_{AOA} of the mobile terminal 15, i.e., the spread S_{AOA} of the angle of arrival AOA.

If step 55 decides that beamforming shall not be performed (N) then step 57 may be skipped, as shown in Figure 2.

The steps 53, 55, and 57 serve for adapting signal processing performed by the base station 13 and/or the terminal 15 according to the determined characteristics (block 59).

Furthermore, the method 41 comprises a step 61 that determines a value c of the at least one characteristic depending on a data transmission process performed by the base station 13 and/or the terminal 15 are depending on measured radio conditions. These values c, in particular the values P, D, B, V, L, R, P_{LOS}, α, and/or αₐ, are assigned to the current location r and stored in the database 23. The database 23 may determine the sub-area 27 to which the location r belongs and modify the values c assigned to that sub-area 27 according to the determined values.

Step 61 may comprise collecting receive signal strength (RSS) measurements reported by the terminals 15 to the base station 13 and combine these measurements with the location r determined in step 45, calculating values of the characteristics depending on the RSS measurements and storing the results into the database 23. Step 61 is the last step in the exemplary method 41 shown in Figure 2.

In a preferred embodiment, the method 41 is executed repeatedly, preferably periodically, in order to continousely adapt the signal processing to the at least one characteristic of the radio channel 27. In some embodiments, the method 41 comprises only a part of the steps shown in Figure 2. In addition, the order of the steps shown in Figure 2 may be changed. In particular, the steps 53, 55, 57, and/or 61 may be omitted. In yet another embodiment at least a part of the steps of method 41 are executed in parallel rather than sequentially as shown in Figure 2. For example, step 61 may be executed parallel and independently from the remaining steps of method 41.

To sum up, the method 41 allows for using long term characteristics, that depend on the environment and the geographic location r of the terminal 15 may be used in order to adapt a signal processing for data transmission over the radio channel 17. The characteristic may include e.g. a power delay profile P, the line-of-sight probability P_{LOS}, an angular spread S_{AOA} of the mobile terminal 15 with respect to the antenna of the base station 13, an angle of arrival AOA, the path loss L of the radio channel 17, and/or second order statistic like the transmit covariance matrix R. The characteristic may be a large scale characteristic, indicating whether the location r is indoor, outdoor, in an open area, in a whole area, in a pedestrian area, or in an area used by vehicles. Values of these characteristics are assigned to the sub-area 27 of the coverage area 25 and stored in the database 23. Adaptive algorithms used for signal transmission may use these location-dependent values stored in the database 23.

In some embodiments all above-mentioned characteristics are stored in the database 23 and/or retrieved for adapting the signals processing. However, in other embodiments only one or some of these characteristics is used. Each above-mentioned characteristic may be applied for adaptation of any type of signal processing such as channel estimation and/or adapting the beamforming.

The functions of the various elements shown in the Figures, including any functional blocks labelled as 'processors', or control circuitry' may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor, 'controller', or 'control circuitry' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. Method (41) for data transmission over a radio channel (17) between a first station (13) of a wireless network (11) and a second station (15) of said network (11), the method (41) comprising:
- determining (51) at least one characteristic (c) of the radio channel (17) and
- adopting (59) signal processing being related to said data transmission and being performed by the first station (13) and/or the second station (15) according to said characteristic (c);
wherein the at least one characteristic (c) is determined depending on a geographic location (r, s) of at least one of said stations (13, 15).

2. Method (41) according to claim 1, wherein the first station is a fixed station (13), the second station is a portable station (15b) or a mobile station (15a), and the at least one characteristic (c) is determined depending on the geographic location (r) of the second station (15).

3. Method (41) according to claim 1 or claim 2, wherein determining (51) the at least one characteristic (c) comprises retrieving (47) the characteristic (c) from a database (23), said database being addressed by said geographic location (r, s).

4. Method (41) according to one of the precedent claims, wherein the at least one characteristic (c) is a statistical characteristic of the radio channel (17).

5. Method (41) according to one of the claims 2 to 4,
wherein the method (41) comprises determining (61) a value of the at least one characteristic (c) depending on the data transmission and/or measured radio conditions and updating the database (23) using the value and the geographic location (r) of the second station (15).

6. Method (41) according to one of claims 2 to 5, wherein a coverage area (25) of the network is subdivided into multiple sub-areas (27) and the at least one characteristic (c) is assigned to one of said sub-areas (27).

7. Method (41) according to one of the precedent claims, wherein the adapting (59) said signal processing comprises estimating (53) the channel (17) depending on the at least one characteristic (c).

8. Method (41) according to claim 7, wherein the characteristic (c) is a delay spread parameter (D) of the channel, a Doppler spread parameter (B) of the channel (17), and/or a parameter characterizing a velocity profile (V) of the second station (15).

9. Method (41) according to one of the precedent claims, wherein adapting (59) signal processing comprises deciding (55) on whether to perform beamforming depending on the at least one characteristic (c).

10. Method (41) according to claim 9, wherein the characteristic is a line-of-sight probability parameter (P_{LOS}) characterizing a probability that there is a line-of-sight between the first station (13) and the second station (15).

11. Method (41) according to claim 9 or 10, wherein adapting (59) said signal processing comprises calculating (57) beamforming weights (w) and/or at least one precoding matrix, said calculating depending on the at least one characteristic (c).

12. Station (13, 15) for a wireless network (11), said station (13, 15) being adapted for data transmission over a radio channel (17) between said station (13, 15) and a further station (15, 13) of the wireless network (11), said station (11, 13) being arranged for:
- determining (51) at least one characteristic (c) of the radio channel (17) and
- adapting (59) signal processing being related to said data transmission and being performed by the station (13, 15) to said characteristic;
wherein said station (13, 15) is arranged for determining the at least one characteristic (c) depending on a geographic location (r, s) of at least one of said stations (13, 15).

13. Station (13, 15) according to claim 12, wherein the station is a base station (13) of the network (13), a fixed or portable terminal (15b) of the network (13), or a mobile terminal (15a) of the network (11).

14. Station (13, 15) according to claim 12 or 13, wherein the station (13, 15) is arranged for executing a method (41) according to one of claims 1 to 11.
